# EUROPEAN PATENT APPLICATION

(11) **EP 4 752 602 A1**
(43) Date of publication of application: **03.06.2026**
(21) Application number: 24844702.1
(22) Date of filing: 19.07.2024
(51) Int. Cl.: G01S 17/08, G01S 7/481

(54) **DISTANCE MEASUREMENT APPARATUS AND SELF-TRAVELLING DEVICE**

(30) Priority: 26.07.2023 CN 202321988585 U
(71) Applicant: Beijing Roborock Technology Co., Ltd., Beijing 102206 (CN)
(72) Inventor: WANG, Mingchuan, Beijing 102206 (CN); LIU, Bo, Beijing 102206 (CN); ZHANG, Wei, Beijing 102206 (CN); WANG, Miao, Beijing 102206 (CN)
(74) Representative: Maiwald GmbH
(86) International application number: PCT/CN2024/106312
(87) International publication number: WO 2025/021010

(57) **Abstract**

A distance measurement apparatus and a self-travelling device. The distance measurement apparatus (200) comprises an emission assembly (210), a receiving mirror (220), a detection assembly (230) and a controller, wherein the receiving mirror (220) is spaced apart from the emission assembly (210); the detection assembly (230) is positioned near a focal plane of the receiving mirror (220); the emission assembly (210) comprises at least two emission light sources, the light emission directions of which are not parallel to each other, the emission light sources are configured to emit toward a target object (300) detection light having a divergence angle; the detection assembly (230) comprises at least two photosensitive surfaces; the photosensitive surfaces are configured to receive information of reflected light that is reflected back by the target object (300) and passes through the receiving mirror (220); the controller is electrically connected to the emission light sources and the detection assembly (230); and the controller is configured to temporally control the operation of each emission light source and determine a measured distance of the target object (300) on the basis of the information of the reflected light of the same emission light source that is received by each photosensitive surface.

## Description

The present disclosure claims priority to Chinese Patent Application No. 202321988585.3, filed with China National Intellectual Property Administration on July 26, 2023 and entitled "RANGING APPARATUS AND SELF-PROPELLED DEVICE", the content of which is incorporated herein by reference in its entirety.

### TECHNICAL FIELD

The present disclosure relates to the field of smart home technologies, and in particular, to a ranging apparatus and a self-propelled device.

### BACKGROUND

With the development and iteration of technologies, mobile robots such as smart home cleaning robots, commercial cleaning robots, and other service robots have been widely used in scenarios such as commercial places, homes, and industrial factories. In many application scenarios, mobile robots need to achieve a function of traveling along a wall to ensure a good cleaning effect.

### SUMMARY

A series of simplified concepts is introduced in the SUMMARY section, which will be further described in detail in the DETAILED DESCRIPTION section below. This section of the present disclosure is not intended to attempt to define key features and essential technical features of the claimed technical solutions, nor is it intended to attempt to delineate the protection scope of the claimed technical solutions.

In one embodiment according to a first aspect of the present disclosure, a ranging apparatus configured for a self-propelled device is provided. The ranging apparatus includes: an emission assembly, a receiving mirror, a detection assembly, and a controller, the receiving mirror and the emission assembly being spaced apart from each other, the detection assembly being located near a focal plane of the receiving mirror, the emission assembly including at least two emitting light sources with light-emitting directions not parallel to each other, the emitting light source being configured to emit probe light with a divergence angle to a target object, the detection assembly including at least two photosensitive surfaces, and the photosensitive surface being configured to receive reflected light information passing through the receiving mirror and reflected by the target object; and the controller being electrically connected to the emitting light sources and the detection assembly, and the controller being configured to control the emitting light sources to work in a time-division manner, and determine a measured distance of the target object according to the reflected light information from the same emitting light source received by the photosensitive surfaces.

Further, the photosensitive surface is disposed opposite to a light-emergent side of the receiving mirror. The reflected light information includes energy values of light spots from the same emitting light source distributed on the photosensitive surfaces. The energy values of the light spots on the photosensitive surfaces are associated with the measured distance. The energy values of the light spots on the photosensitive surfaces are associated with a position and/or an area of a distribution map of the light spots on the photosensitive surfaces.

Further, each emitting light source includes a luminous body, and luminous bodies of the emitting light sources have different wavelength ranges.

Further, the ranging apparatus further controls a diaphragm corresponding to the emitting light source, where the diaphragm is located on an emission optical path of the emitting light source, and is configured to limit an intensity and/or a divergence angle of emitted light emitted by the emitting light source; and/or the diaphragm is located on a receiving optical path of the photosensitive surface, and is configured to limit an intensity and/or an incidence angle of reflected light received by the photosensitive surface and reflected by the target object.

Further, each emitting light source includes a luminous body and a collimating lens, and the collimating lens is located on an emission optical path of the luminous body and is configured to change an emission angle and/or a divergence angle of the luminous body.

Further, the emission assembly also includes: a light-shielding frame, the light-shielding frame being located between the corresponding luminous body and the collimating lens, and being disposed between two adjacent collimating lenses to separate the two adjacent collimating lenses.

Further, the ranging apparatus also includes: light filters corresponding to the luminous bodies, the light filters being respectively disposed on light channels between the target object corresponding to the luminous bodies and the detection assembly, where based on the fact that the luminous bodies of the emitting light sources have the different wavelength ranges, the light filters are configured to transmit optical signals within the wavelength ranges of the corresponding luminous bodies.

Further, the detection assembly is disposed parallel to or obliquely to the focal plane of the receiving mirror; and the detection assembly is located at the focal plane of the receiving mirror.

Further, an inclination angle between each emitting light source and the receiving mirror is adjustable.

Further, the emission assembly also includes: a circuit board, the emitting light sources being mounted on the circuit board and electrically connected to the circuit board, where the at least two emitting light sources are spaced apart from each other in a straight line or a curved line.

Further, the plurality of emitting light sources include a first emitting light source, a second emitting light source, and a third emitting light source that are sequentially distributed from top to bottom in a vertical direction, a light-emitting direction of the first emitting light source is inclined upward, a light-emitting direction of the second emitting light source is horizontally forward, and a light-emitting direction of the third emitting light source is inclined downward.

Further, the emission assembly also includes an encoder configured to encode emitted signals emitted by the emitting light sources; and a processor configured to decode received signals received by the photosensitive surfaces, and to calculate a distance value when the received signals match the emitted signals.

In a second aspect of the present disclosure, a self-propelled device is provided, which includes: a machine body, and the ranging apparatus according to any one of the first aspect. The ranging apparatus is disposed on the machine body.

In the ranging apparatus and the self-propelled device according to the present disclosure, the ranging apparatus includes an emission assembly, a receiving mirror, a detection assembly, and a controller, where the emission assembly includes at least two emitting light sources with different light-emitting directions, and the detection assembly includes at least two photosensitive surfaces. The arrangement of the emitting light sources, the receiving mirror, and the detection assembly is similar to the arrangement of various components in an oblique optical path diagram in a triangulation ranging method. Therefore, based on the same principle as the triangulation ranging method, the controller controls the emitting light sources to work in a time-division manner, and can achieve time-division and multi-directional ranging on the target object according to the reflected light information from the same emitting light source received by the detection assembly. That is, distance measurement can be performed on the same target object or different target objects from different directions, which is beneficial to improving ranging accuracy and stability of the target object and ensuring a good cleaning effect and an accurate obstacle avoidance operation. The distance detection apparatus features low-cost components and a simple structure, and is easy to assemble and debug, making it suitable for mass production, popularization, and application.

The above description is only an overview of the technical solutions of the present application. To more clearly understand the technical means of the present application to enable implementation in accordance with the content of the specification and to make the above and other purposes, features, and advantages of the present application more obvious and easy to understand, the detailed description of the present application is provided below.

### BRIEF DESCRIPTION OF THE DRAWINGS

The following drawings of the present disclosure are used herein as part of embodiments of the present disclosure for understanding the present disclosure. The embodiments of the present disclosure and descriptions thereof are shown in the drawings to explain the principles of the present disclosure. In the drawings:
FIG. 1 is a schematic structural diagram of a self-propelled device according to an optional embodiment of the present disclosure;
FIG. 2 is a schematic structural diagram of the embodiment shown in FIG. 1 from another perspective;
FIG. 3 is a schematic diagram of arrangement of a ranging apparatus according to an optional embodiment of the present disclosure;
FIG. 4 is a schematic diagram of energy distribution of a light spot received by a detection assembly at a first measured distance according to an optional embodiment of the present disclosure;
FIG. 5 is a schematic diagram of energy distribution of a light spot received by a detection assembly at a second measured distance according to an optional embodiment of the present disclosure;
FIG. 6 is a schematic structural diagram of a ranging apparatus according to an optional embodiment of the present disclosure;
FIG. 7 is a schematic structural diagram of the embodiment shown in FIG. 6 from another perspective;
FIG. 8 is a schematic structural diagram of an emission assembly according to an optional embodiment of the present disclosure;
FIG. 9 is a schematic structural diagram of the embodiment shown in FIG. 8 from another perspective;
FIG. 10 is a schematic structural diagram of the embodiment shown in FIG. 8 from yet another perspective;
FIG. 11 is a partial schematic structural diagram of the embodiment shown in FIG. 8;
FIG. 12 is a schematic structural diagram of the embodiment shown in FIG. 11 from another perspective; and
FIG. 13 is a schematic diagram of an optical path of a triangulation ranging method according to an optional embodiment.

Description of reference numerals
100 self-propelled device, 110 machine body, 111 forward portion, 112 rearward portion, 120 sensing system, 121 position determining apparatus, 122 buffer, 130 driving system, 131 main driving wheel assembly, 132 driven wheel, 140 cleaning system, 141 dry cleaning system, 142 wet cleaning system, 143 side brush, 160 power system, 170 human-machine interaction system, 200 ranging apparatus, 210 emission assembly, 211 first emitting light source, 212 second emitting light source, 213 third emitting light source, 214 circuit board, 215 collimating lens, 220 receiving mirror, 230 detection assembly, 231 first photosensitive surface, 232 second photosensitive surface, 300 target object, 310 laser head, 320 camera.

### DETAILED DESCRIPTION

In the following description, numerous specific details are set forth to provide a more thorough understanding of the technical solutions according to the present disclosure. However, it will be apparent to those skilled in the art that the technical solutions according to the present disclosure may be implemented without one or more of these details.

It should be noted that the terms used herein are only for the purpose of describing specific embodiments, and are not intended to limit exemplary embodiments according to the present disclosure. As used herein, the singular forms are intended to include the plural forms as well, unless the context clearly indicates otherwise. In addition, it should be further understood that the terms "comprise" and/or "include" as used in the specification indicate the presence of the stated features, integers, steps, operations, elements, and/or assemblies, but do not exclude the presence or addition of one or more other features, integers, steps, operations, elements, assemblies, and/or combinations thereof.

Exemplary embodiments according to the present disclosure will now be described in more detail with reference to the drawings. However, these exemplary embodiments may be implemented in various forms and should not be construed as being limited to the embodiments set forth herein. It should be understood that these embodiments are provided to make the disclosure of the present disclosure thorough and complete, and to fully convey the concepts of these exemplary embodiments to those of ordinary skill in the art.

One embodiment of the present disclosure provides a possible application scenario. The application scenario includes a self-propelled device 100. Specifically, the self-propelled device 100 includes a self-moving cleaning device. For example, the self-propelled device 100 may be a sweeping robot, a mopping robot, a sweeping and mopping integrated robot, or the like. It can be understood that the self-propelled device 100 may also be other devices that meet the requirements. In the embodiment of the present disclosure, the self-propelled device 100 being a self-moving cleaning robot is used as an example for description. The self-propelled device 100 is generally controlled by a main body unit button, an APP, or the like to travel on a predetermined cleaning path, thereby performing corresponding functional operations.

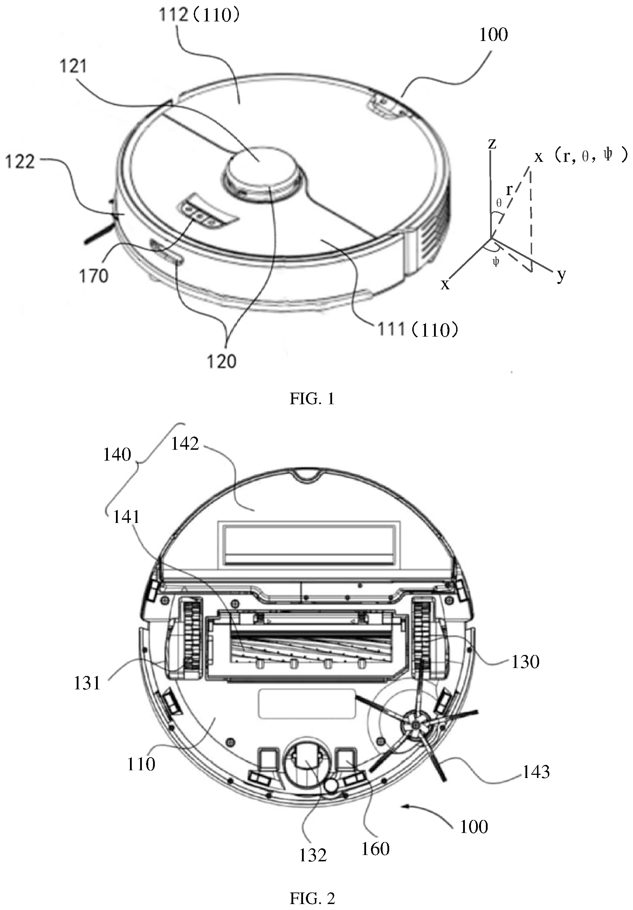

Further, as shown in FIGs. 1 and 2, the self-propelled device 100 may include a machine body 110, a sensing system 120, a control module, a driving system 130, a cleaning system 140, a power system 160, and a human-machine interaction system 170.

As shown in FIG. 1, the machine body 110 includes a forward portion 111 and a rearward portion 112, which have an approximately circular shape (both front and rear being circular), and may also have other shapes, including but not limited to an approximately D shape with a rectangular front and a circular rear, and a rectangular or square shape with a rectangular or square front and a rectangular or square rear.

As shown in FIGs. 1 and 2, the sensing system 120 includes a position determining apparatus 121 located on the machine body 110, a collision sensor and a proximity sensor that are disposed on a buffer 122 of the forward portion 111 of the machine body 110, a cliff sensor disposed on a lower part of the machine body 110, and a sensing apparatus such as a magnetometer, an accelerometer, a gyroscope, and an odometer disposed inside the machine body 110, and is configured to provide various position information and movement state information of the machine to the control module. The position determining apparatus 121 includes, but is not limited to, a camera 320 and a laser distance sensor 200 (LDS, short for laser distance sensor).

As shown in FIG. 1, the forward portion 111 of the machine body 110 may carry a buffer 122. During the cleaning process, when the driving system 130 propels the self-propelled device 100 to travel on the ground, the buffer 122 detects one or more events in a travel path of the self-propelled device 100 via a sensor system, such as an infrared sensor, disposed on the buffer. The self-propelled device 100 may control, based on the events detected by the buffer 122, such as an obstacle or a wall, the driving system 130 to cause the self-propelled device 100 to respond to the events, such as performing an obstacle avoidance operation to move away from the obstacle.

The control module is disposed on a main circuit board in the machine body 110, and includes a computing processor, such as a central processing unit or an application processor, that communicates with a non-transitory memory, such as a hard disk, a flash memory, or a random access memory. The application processor draws a real-time map of an environment in which the self-propelled device 100 is located by using a positioning algorithm, such as simultaneous localization and mapping (SLAM, short for simultaneous localization and mapping) based on the obstacle information fed back by the laser distance sensor 200. In addition, with reference to distance information and speed information that are fed back by sensing apparatuses such as the sensor, the cliff sensor, the magnetometer, the accelerometer, the gyroscope, and the odometer disposed on the buffer 122, the current working state and position of the self-propelled device 100 can be comprehensively determined, as well as the current pose of the self-propelled device 100, such as negotiating a doorsill, getting onto a carpet, being located at a cliff, being stuck from above or below, having a full dust box, or being picked up. In addition, a specific strategy for a next action is given for different cases, so as to improve the cleaning performance and user experience of the self-propelled device 100.

As shown in FIG. 2, the driving system 130 may steer the machine body 110 to run across the ground based on driving commands with distance and angle information (e.g., x, y, and θ components). The driving system 130 includes a main driving wheel assembly 131. The main driving wheel assembly 131 may simultaneously control a left wheel and a right wheel. In order to control the movement of the machine more accurately, the main driving wheel assembly 131 may include a left driving wheel assembly and a right driving wheel assembly, respectively. The left driving wheel assembly and the right driving wheel assembly are disposed along a transverse axis defined by the machine body 110. In order to enable the self-propelled device 100 to move more stably on the ground or to have a stronger movement ability, the self-propelled device 100 may include one or more driven wheels 132. The driven wheels 132 include, but are not limited to, universal wheels. The main driving wheel assembly 131 includes a traveling wheel, a drive motor, and a control circuit for controlling the drive motor. The main driving wheel assembly 131 may be further connected to a circuit for measuring a driving current and an odometer. The driving wheel may be provided with a biased drop suspension system that is movably secured, such as rotatably attached, to the machine body 110, and receives a spring bias that is biased downward and away from the machine body 110. The spring bias allows the driving wheel to maintain contact and traction with the ground with certain ground grip, while a cleaning element of the self-propelled device 100 is also in contact with the ground with a certain pressure.

The power system 160 includes a rechargeable battery, for example, a nickel-hydrogen battery and a lithium battery. The rechargeable battery may be connected to a charging control circuit, a battery pack charging temperature detection circuit, and a battery undervoltage monitoring circuit. The charging control circuit, the battery pack charging temperature detection circuit, and the battery undervoltage monitoring circuit are then connected to a single-chip microcomputer control circuit. The main body unit is charged through connection to a charging pile via charging electrodes arranged on the side or bottom of the machine body.

The human-machine interaction system 170 includes a button on a main body unit panel for a user to select a function, and may also include a display screen and/or an indicator light and/or a speaker, where the display screen, the indicator light, and the speaker show a current state of the machine or function options to the user, and may also include a mobile phone client program. For a path navigation type automatic self-propelled device 100, a mobile phone client may show a map of an environment in which the device is located and a location of the machine to the user, providing the user with richer and more user-friendly function options.

The cleaning system 140 may be a dry cleaning system 141 and/or a wet cleaning system 142.

As shown in FIG. 2, the dry cleaning system 141 according to one embodiment of the present disclosure may include a roller brush, a dust box, a fan, and an air outlet. The roller brush with certain interference with the ground sweeps up garbage on the ground and rolls up the garbage to the front of a dust suction inlet between the roller brush and the dust box, and then the garbage is sucked into the dust box by the suction gas generated by the fan and passing through the dust box. The dry cleaning system 141 may also include a side brush 143 with a rotation shaft that is angled relative to the ground to move debris into the roller brush region of the cleaning system 140.

As shown in FIG. 2, the wet cleaning system 142 according to the embodiment of the present disclosure may include: a cleaning head, a driving unit, a water supply mechanism, a liquid storage tank, and the like. The cleaning head may be disposed below the liquid storage tank, and the cleaning solution inside the liquid storage tank is delivered to the cleaning head through the water supply mechanism, such that the cleaning head performs wet cleaning on a plane to be cleaned. In other embodiments of the present disclosure, the cleaning solution inside the liquid storage tank may also be directly sprayed onto the plane to be cleaned, and the cleaning head cleans the plane by evenly applying cleaning solution.

The cleaning head is configured to clean a surface to be cleaned. The driving unit is configured to drive the cleaning head to substantially reciprocate along a target surface. The target surface is a part of the surface to be cleaned. The cleaning head reciprocates along the surface to be cleaned. The contact surface of the cleaning head with the surface to be cleaned is provided with a cleaning cloth or a cleaning plate, which generates high-frequency friction with the surface to be cleaned through reciprocating, thereby removing stains on the surface to be cleaned.

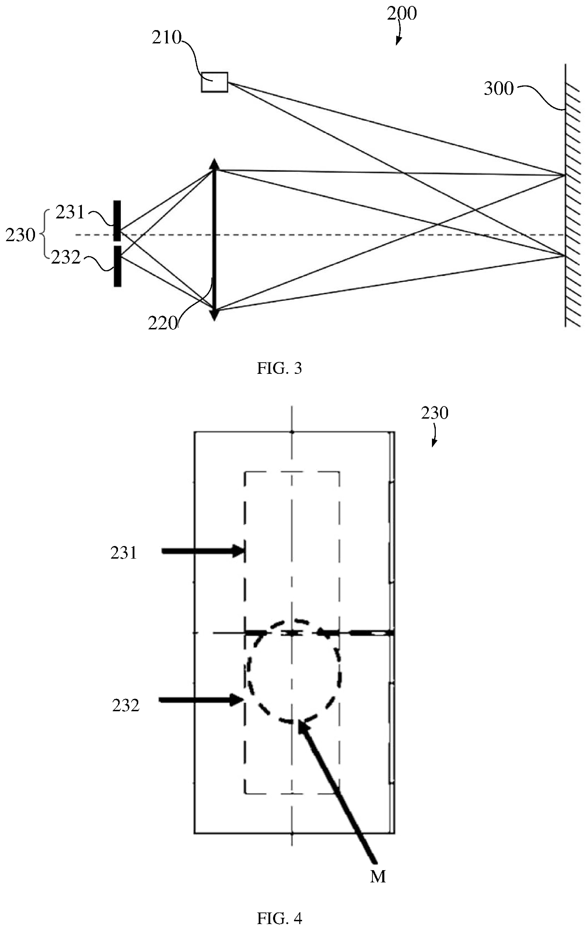

As shown in FIGs. 3, 6, 7, and 8, the present disclosure provides a ranging apparatus 200 applied to a self-propelled device 100. The ranging apparatus 200 includes: an emission assembly 210, a receiving mirror 220, a detection assembly 230, and a controller, the receiving mirror 220 and the emission assembly 210 being spaced apart from each other, the detection assembly 230 being located near a focal plane of the receiving mirror 220, the emission assembly 210 including at least two emitting light sources with light-emitting directions not parallel to each other, the emitting light source being configured to emit probe light with a divergence angle to a target object 300, the detection assembly 230 including at least two photosensitive surfaces, and the photosensitive surface being configured to receive reflected light information passing through the receiving mirror 220 and reflected by the target object 300; and the controller being electrically connected to the emitting light sources and the detection assembly 230, and the controller being configured to control the emitting light sources to work in a time-division manner, and determine a measured distance of the target object 300 according to the reflected light information from the same emitting light source received by the photosensitive surfaces.

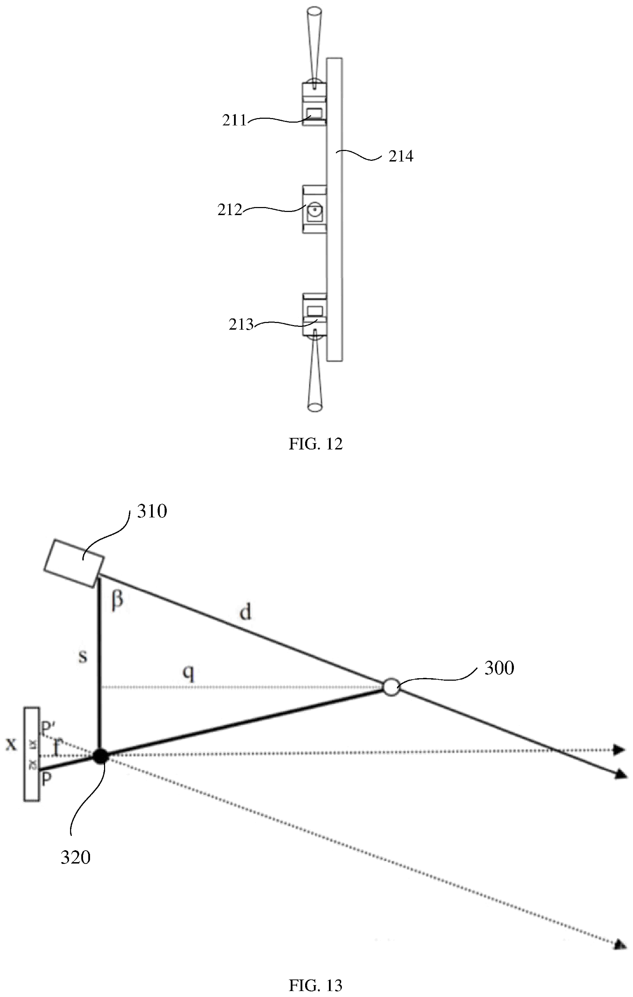

In this embodiment, the arrangement of the receiving mirrors 220 and the detection assembly 230 of the emission assembly 210 is similar to the arrangement of various components in the oblique optical path diagram in a triangulation ranging method. As shown in FIG. 13, a single-point laser is used as an example to describe the oblique optical path in the triangulation ranging method.

As shown in FIG. 13, a laser head 310 and a camera 320 are on the same horizontal line (referred to as a reference line), with a distance s therebetween. The focal length of the camera 320 is f, and the included angle between the laser head 310 and the reference line is β. It is assumed that a position at which the target object 300 is reflected back to an imaging plane of the camera 320 under irradiation of a point laser is a point P. Based on geometric knowledge, a similar triangle can be formed. The triangle formed by the laser head 310, the camera 320, and the target object 300 is similar to the triangle formed by the camera 320, the imaging point P, and an auxiliary point P'. Let PP' = x, with q and d defined as shown in FIG. 13. From the similar triangles, f/x = q/s, which yields q = fs/x, where x = x + x = f/tanβ + pixelSize × position, in which pixelSize denotes the size of a pixel unit, and position denotes the position of the imaging pixel coordinate relative to an imaging center. Finally, a distance d can be calculated as: d = q/sinβ.

In this embodiment, positions of the emitting light sources of the emission assembly 210 and the receiving mirror 220 match positions of the laser head 310 and the camera 320; that is, the emitting light source and the receiving mirror 220 are arranged at a certain interval and at an angle, such that the emitting light source and the receiving mirror 220 are space apart from each other, and the detection assembly 230 is located near the focal plane of the receiving mirror 220. The emitting light source emits probe light to the target object 300. The probe light, after being reflected by the target object 300, can be received by the receiving mirror 220 via the detection assembly 230, such that the detection assembly 230 can receive reflected light information passing through the receiving mirror 220 and reflected by the target object 300, and as the preset ranging changes, the reflected light information received by the detection assembly 230 may also change accordingly. Therefore, based on the same principle as the triangulation ranging method, the controller can determine the measured distance of the target object 300 according to the reflected light information received by the detection assembly 230, so as to achieve a ranging function. Therefore, the ranging apparatus 200 can be used to detect an obstacle near the self-propelled device 100, such that the self-propelled device 100 achieves a function of traveling along the wall, or the proximity sensor cooperates with other sensors, thereby enabling the self-propelled device 100 to travel along the wall to ensure a good cleaning effect and an accurate obstacle avoidance operation.

The self-propelled device in the related art generally uses an infrared emitting diode and an infrared receiving triode as a transceiver to determine the distance between the self-propelled device and the target object to achieve traveling along the wall. In the above distance measurement apparatus, since a light-emitting angle of an infrared emitting diode is single, the distance detection of the target object is generally achievable only at one light-emitting angle, for example, by parallel ranging. When the self-propelled device encounters a scenario in which the target object has a complex contour (such as a pet food container, a small toy, a furniture handle line, or the like), the problem of misjudgment of the distance occurs easily, and the accuracy along the wall is poor.

Therefore, as shown in FIGs. 3, 6, 7, 8, 9, and 10, in the ranging apparatus 200 according to the embodiments of the present disclosure, the emission assembly 210 includes at least two emitting light sources. Since light emitted by the emitting light sources has a divergence angle, the light-emitting directions of the emitting light sources are not parallel to each other; that is, the light-emitting angles of the emitting light sources are different. This can also be understood as that light-emitting surfaces of the emitting light sources are not parallel to each other, and the light-emitting surfaces are perpendicular to the light-emitting directions. In this way, the emitting light sources are caused to emit probe light to the target object 300 from different directions, such that the probe light from different directions, after being reflected by the target object 300, can be received by the detection assembly 230 via the receiving mirror 220 from different directions, thereby increasing the multi-directionality and comprehensiveness of the reflected light of the target object received by the detection assembly 230, and helping improve the ranging accuracy and comprehensiveness. In addition, since the detection assembly 230 includes at least two light-sensing surfaces, each light-sensing surface can receive the reflected light information reflected by the target object 300 within the preset ranging range, and as the preset ranging changes, the reflected light information received by a light-sensing surface may also change accordingly. Therefore, based on the same principle as the triangulation ranging method, the controller can determine the measured distance of the target object 300 according to the reflected light information from the same emitting light source received by the light-sensing surfaces, so as to achieve the ranging function. The controller controls the emitting light sources to work in a time-division manner, such that the emitting light sources can multiplex the detection assembly 230 in a time-division manner to achieve distance detection. Further, at least two emitting light sources cooperate with the detection assembly 230 to measure the distance of the same target object 300 from a plurality of directions. Therefore, stable and accurate distance detection can also be achieved for a target object 300 with a complex contour (such as a pet food container, a small toy, a furniture handle, and an angled chair), or distance measurement can be performed on different target objects from a plurality of directions, such that the self-propelled device 100 can accurately walk along the wall.

In other words, in the embodiments of the present disclosure, each emitting light source and the detection assembly 230 form a ranging apparatus. Since each emitting light source has a different emission angle, the distance measurement of the same target object 300 or different target objects can be achieved in different directions and at different positions. Compared with the related art in which the detection assembly 230 can only achieve ranging in a single direction, which causes ranging of the target object with a complex contour to be inaccurate and the target object beyond the direction to collide with the machine body 110 easily, the detection range and the detection direction are expanded, and multi-directional obstacle detection may be achieved for the self-propelled device 100, so as to expand the ranging range and improve the ranging accuracy of the target object 300 with a complex contour, and further improve the obstacle avoidance performance of the self-propelled device 100 and make it suitable for popularization and application.

In addition, the control apparatus controls the emitting light sources to work in a time-division manner. Each emitting light source and the detection assembly 230 form a ranging apparatus 200. The ranging apparatus 200 formed by a plurality of emitting light sources and the same detection assembly 230 achieves multi-directional and time-division ranging of the target object 300, and achieves multiplexing of the detection assembly 230, such that the entire ranging apparatus 200 features a simple structure form, is easy to assemble and debug, and is cost-effective, making it convenient for mass production and suitable for popularization and application.

Further, since the detection assembly 230 includes at least two photosensitive surfaces, and the reflected light reflected by the target object 300 is received by the photosensitive surfaces of the detection assembly 230 after passing through the receiving mirror 220, the detection assembly 230 including at least two photosensitive surfaces increases the area for the detection assembly 230 to receive the reflected light compared with an infrared receiving triode including one photosensitive surface in the related art. Therefore, the size of the receiving mirror 220 and the number of the photosensitive surfaces in the detection assembly 230 are reasonably set. For example, the size of the receiving mirror 220 is set to be large enough, and the number of the photosensitive surfaces is reasonably set such that the detection assembly 230 has a sufficient receiving area for receiving the reflected light. In this way, the detection assembly 230 can comprehensively receive the reflected light information reflected by the target object 300 from various directions, thereby ensuring ranging accuracy and stability. In addition, with the large receiving area of the detection assembly 230, the problem of detection failure caused by large-angle returned light due to non-Lambertian scattering of a mirror surface, glass, and a baseboard with a special smooth surface can be effectively avoided, thereby ensuring the ranging accuracy. Moreover, when the scattering characteristic of the surface of the target object 300 changes, the ranging performance is relatively stable, which is beneficial to improving the accuracy of the self-propelled device 100 along the wall.

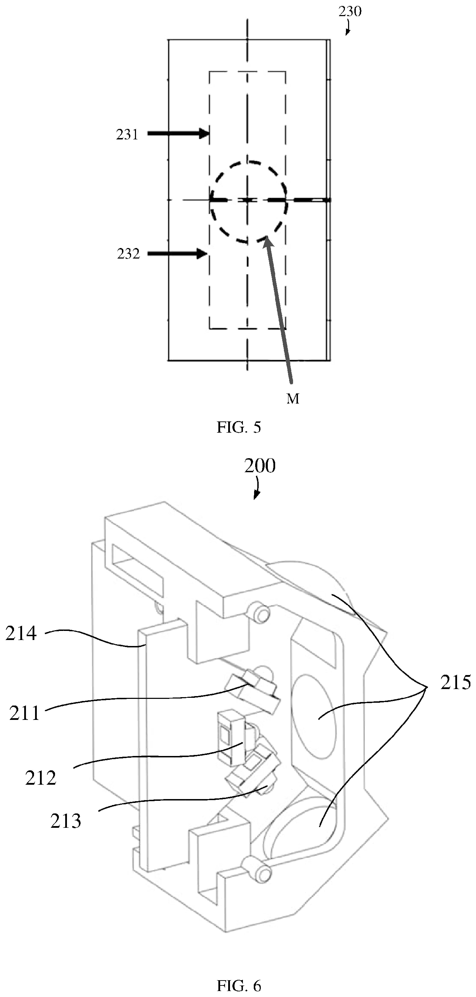

The emission assembly 210 may include two emitting light sources, three emitting light sources, four emitting light sources, or another number of emitting light sources. As shown in FIGs. 5 to 12, the emission assembly 210 includes three emitting light sources, i.e., a first emitting light source 211, a second emitting light source 212, and a third emitting light source 213. Light-emitting directions of the three emitting light sources are not parallel.

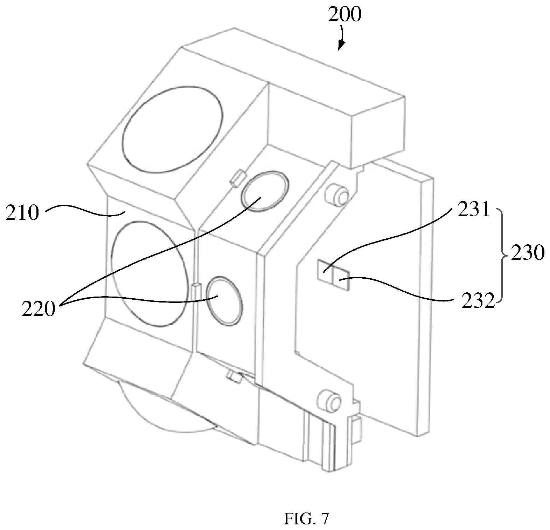

The detection assembly 230 may include two photosensitive surfaces, three photosensitive surfaces, four photosensitive surfaces, or another number of photosensitive surfaces. It can be understood that the number of the photosensitive surfaces in the detection assembly 230 is reasonably set to ensure that the detection assembly 230 has a large receiving area for reflected light, and ensure that the detection assembly 230 can receive the reflected light information reflected by the target object 300 from various directions. In addition, the problem of detection failure caused by large-angle returned light due to non-Lambertian scattering can be avoided, and the ranging accuracy and stability can be ensured. It should be noted that the at least two photosensitive surfaces may be located on the same detector, or may be distributed on different detectors, which is not specifically described in the present disclosure. Specifically, as shown in FIGs. 3 and 7, the detection assembly includes two photosensitive surfaces.

For example, as shown in FIG. 6, the emitting light sources include a first emitting light source 211, a second emitting light source 212, a third emitting light source 213, and the like. Light-emitting directions of the three emitting light sources are not parallel. In an actual use process, the controller controls the first emitting light source 211 to be in an on-state and the other emitting light sources to be in an off-state at a first moment. In this case, the controller can determine the measured distance of the target object 300 irradiated by the first emitting light source 211 according to the reflected light information of the first emitting light source 211 received by the photosensitive surfaces. The controller controls the second emitting light source 212 to be in an on-state and the other emitting light sources to be in an off-state at a second moment. In this case, the controller can determine the measured distance of the target object 300 irradiated by the second emitting light source 212 according to the reflected light information of the second emitting light source 212 received by the photosensitive surfaces. The controller controls the third emitting light source 213 to be in an on-state and the other emitting light sources to be in an off-state at a third moment. In this case, the controller can determine the measured distance of the target object 300 irradiated by the third emitting light source 213 according to the reflected light information of the third emitting light source 213 received by the photosensitive surfaces. By analogy, the controller controls only one emitting light source to be in an on-state at the same moment, and sequentially controls the emitting light sources to be in an on-state at different moments according to a certain time sequence, so as to achieve distance measurement of the same target object 300 and distance measurement of different target objects. It can be understood that, at a certain moment, the controller may control the first emitting light source 211 to be in the on-state and the other emitting light sources to be in the off-state again. At a next moment, the controller controls the second emitting light source 212 to be in the on-state and the other emitting light sources to be in the off-state. By analogy, the emitting light sources may be controlled to be individually turned on in a time sequence to achieve distance measurement of the same target object 300 and distance measurement of different target objects. Then, the shape of the target object 300 can be determined by integrating the measured distances of the same target object 300 corresponding to different emitting light sources. Even if the contour of the target object 300 is complex, a stable and accurate ranging effect can be achieved. In addition, the distance detection of different target objects can be achieved by integrating the measured distances of different target objects 300 corresponding to different emitting light sources, thereby improving the accuracy of the self-propelled device 100 traveling along the wall.

As shown in FIGs. 6, 7, 8, 9, 10, 11, and 12, in some possible embodiments according to the present disclosure, the emission assembly 210 also includes a circuit board 214. The emitting light sources are mounted on the circuit board 214 and electrically connected to the circuit board 214. The at least two emitting light sources are spaced apart from each other in a straight line or a curved line.

With the arrangement of the circuit board 214, mounting positions are provided for the emitting light sources, and the electrical connection between the light sources and an external power supply is facilitated through the circuit board 214, resulting in a simple structure and convenient connection.

Specifically, the emitting light sources may be mounted on the circuit board 214 by welding, bonding, a snap-fit structure, a mortise-and-tenon structure, a bolt structure, or the like. For example, the emitting light sources may use side-mounted LED light-emitting diodes, which are welded on the circuit board 214 according to different light-emitting directions. As shown in FIGs. 6, 11, and 12, the three emitting light sources are mounted on the circuit board 214 at intervals, and the light-emitting directions of the three emitting light sources are not parallel, such that the light-emitting directions of the three emitting light sources are different.

The at least two emitting light sources may be spaced apart from each other in a straight line or a curved line in a vertical direction; or the at least two emitting light sources may be spaced apart from each other in a straight line or a curved line in a horizontal direction and in a vertical direction; or the at least two emitting light sources may be spaced apart from each other in a straight line or a curved line in other directions that meet the requirements, so as to achieve distance measurement of the same target object 300 from different directions or of the target objects 300 at different positions from different directions.

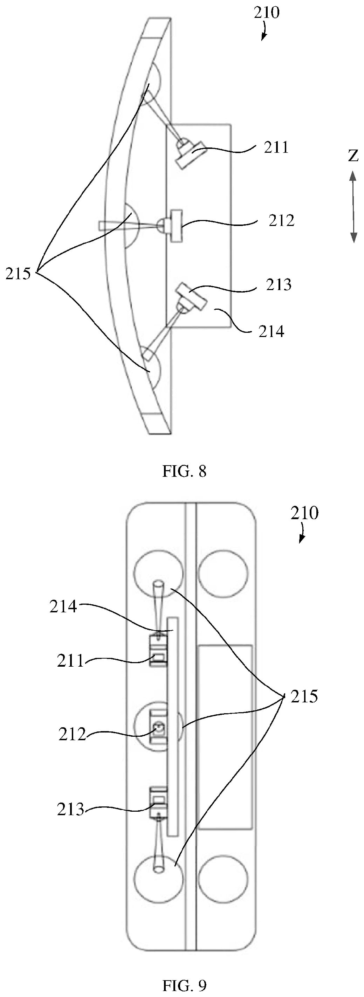

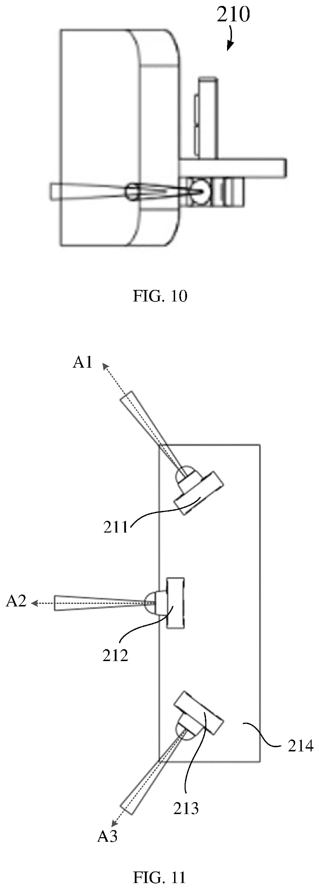

For example, as shown in FIGs. 6, 8, 9, 11, and 12, taking three emitting light sources spaced from each other in a straight line in the vertical direction as an example, the first emitting light source 211, the second emitting light source 212, and the third emitting light source 213 are spaced from each other from top to bottom in the vertical direction. The vertical direction may be indicated by an arrow Z in FIG. 8, and the light-emitting direction of the first emitting light source 211 is obliquely upward, as indicated by a dashed arrow A1 in FIG. 11; the light-emitting direction of the second emitting light source 212 is horizontally forward, as indicated by a dashed arrow A2 in FIG. 11; and the light-emitting direction of the third emitting light source 213 is obliquely downward, as indicated by a dashed arrow A3 in FIG. 11. The on-state of the three emitting light sources is reasonably set, and the computer program is used, such that distance detection can be performed on the same target object 300 or different target objects 300 from three directions in a process of the self-propelled device 100 traveling along the wall, thereby achieving relatively comprehensive distance detection, improving ranging accuracy and comprehensiveness of the target object 300, and improving the accuracy of obstacle avoidance of the self-propelled device 100.

Specifically, in an actual application scenario, some toys have relatively complex contours. Therefore, the three emitting light sources are controlled in a certain order and timing such that only one emitting light source is controlled to be in an on-state at the same moment, and the emitting light sources are controlled to be in an on-state sequentially at different moments. The first emitting light source 211 cooperates with the detection assembly 230 to perform distance measurement of the toy from the top. The second emitting light source 212 cooperates with the detection assembly 230 to perform distance measurement of the toy from the horizontal direction. The third emitting light source 213 cooperates with the detection assembly 230 to perform distance measurement of the toy from the bottom. It can be understood that the time interval for controlling the emitting light sources to be turned on sequentially is short, and may be 0.05. s to 2 s. For example, the time interval may be 0.05 s, 0.1 s, 0.5 s, 1 s, 2 s, or another duration. Therefore, the measured distances of the toy in three directions obtained by the three emitting light sources at different moments are integrated to achieve time-division ranging of the toy in the three directions. Even if the toy has a relatively complex contour, accurate ranging can also be achieved, which is convenient for the self-propelled device 100 to reasonably perform an obstacle avoidance operation, thereby improving the accuracy of traveling along the wall.

In some possible embodiments according to the present disclosure, as shown in FIG. 3, the photosensitive surface faces a light-emergent side of the receiving mirror 220. The reflected light information includes energy values of light spots from the same emitting light source distributed on the photosensitive surface. The energy values of the light spots on the photosensitive surfaces are associated with the measured distance. The energy values of the light spots on the photosensitive surfaces are associated with a position and/or an area of a distribution map of the light spots on the photosensitive surfaces.

As shown in FIGs. 3 and 7, the photosensitive surface faces the light-emergent side of the receiving mirror 220. That is, the detection assembly 230 is located on the light-emergent side of the receiving mirror 220, and the receiving mirror 220 is located on the light-incident side of the detection assembly 230, such that light transmitted by the receiving mirror 220 can be received by the photosensitive surface. The receiving mirror 220 may have a certain convergence effect, and after the reflected light with a large radiation area reflected by the target object 300 is converged by the receiving mirror 220, the reflected light is irradiated on the detection assembly 230 with a small radiation area. Therefore, it can be ensured that the detection assembly 230 can completely and reliably receive the reflected light information reflected from various directions by the target object 300 to ensure the ranging accuracy. Thus, the volume of the detection assembly 230 can be reduced as much as possible, and the cost of the ranging apparatus 200 can be reduced. In addition, in the ranging apparatus 200 according to the embodiments of the present disclosure, the use of one receiving mirror 220 in cooperation with the detection assembly 230 enables ranging with a field of view greater than 110°, thereby reducing the complexity of the optical design. Specifically, the receiving mirror 220 may be a convex lens, or the receiving mirror 220 may be a combination of a convex lens and a concave lens or other lenses.

The reflected light information includes the energy values of the light spots from the same emitting light source distributed on the photosensitive surface. It can be understood that there is energy distribution of the light spot reflected by the target object 300 within a preset ranging range on the photosensitive surface, and as the distance changes, the energy distribution on the photosensitive surface also changes. For example, at different measured distances, a position and/or an area of a distribution map of the light spots on the photosensitive surfaces may change, such that the energy values of the light spots on the photosensitive surfaces also change with different measured distances. Therefore, the controller can determine the distance of the target object 300 according to the energy values of the light spots on the photosensitive surfaces. It can be understood that the target object 300 is a target object 300 irradiated by the emitting light source in the on-state.

Specifically, the relevant parameters and positions of each emitting light source, the receiving mirror 220, and the photosensitive surface in the ranging apparatus 200 need to be reasonably designed, including the divergence angle and the power of each emitting light source, the aperture and the focal length of the receiving mirror 220, the distance and the angle between the emitting light source and the receiving mirror 220, and the position of the photosensitive surface, such that there is a certain energy distribution of the light spots of the reflected light within the preset ranging range on the photosensitive surfaces, and the receiving efficiency is also ensured.

As shown in FIGs. 3, 4, 5, and 7, in some possible embodiments according to the present disclosure, the number of photosensitive surfaces is two. For example, the two photosensitive surfaces are a first photosensitive surface 231 and a second photosensitive surface 232, respectively. The energy value of the light spot on the first photosensitive surface 231 is I1, and the energy value of the light spot on the second photosensitive surface 232 is I2. It can be understood that at different measured distances, the energy value I1 of the light spot on the first photosensitive surface 231 may be different, and the energy value I2 of the light spot on the second photosensitive surface 232 may also be different.

Taking the detection assembly 230 including two photosensitive surfaces as an example, the following distribution of light spots is achieved through reasonable design: When the measured distance of the target object 300 is close, as shown in FIG. 4, after the light reflected by the target object 300 passes through the receiving mirror 220, most of the light spots of the reflected light are distributed on the second photosensitive surface 232, and a smaller part of the light spots of the reflected light are distributed on the first photosensitive surface 231; and when the measured distance of the target object 300 increases, as shown in FIG. 5, the light spots of the reflected light move upward along the focal plane of the receiving mirror 220, and the energy distribution of the light spots received by the first photosensitive surface 231 and the second photosensitive surface 232 also changes accordingly. For example, the light spots distributed on the photosensitive surfaces of the first photosensitive surface 231 and the second photosensitive surface 232 are similar. Therefore, the energy value of the light spot on each photosensitive surface is different, such that the controller can determine different measured distances according to the relationship between the energy values measured by two channels of the two photosensitive surfaces.

It should be noted that a mapping relationship between the relationship between the energy value 1I of the light spot on the first photosensitive surface 231 and the energy value I2 of the light spot on the second photosensitive surface 232 and the measured distance may be reasonably set by a control program to determine the measured distance.

Specifically, the controller determines the distance of the target object 300 according to the energy values of the light spots on the photosensitive surfaces, which includes: the controller determining the measured distance according to a formula I1/I2; or the controller determining the measured distance according to a formula I12/I22; or the controller determining the measured distance according to a formula (I1+I2)/(I1-I2); or the controller determining the measured distance according to a formula (I1-I2)/(I1+I2).

Therefore, the measured distance of the target object 300 can be determined according to the mapping relationship between the foregoing formulas and the measured distance of the target object 300. In addition, when different materials of the target object 300 are detected, the ratio in the foregoing formulas fluctuates slightly, which is beneficial to improving the ranging accuracy and improving the accuracy of the self-propelled device 100 along the wall.

As shown in FIGs. 3, 6, 8, and 9, in some possible embodiments according to the present disclosure, each emitting light source includes a luminous body, and luminous bodies of the emitting light sources have different wavelength ranges.

The luminous body may be a light-emitting diode, such as an LED (light-emitting diode); or the luminous body may be a semiconductor laser light source, such as an LD light source; or the luminous body may be a VCSEL (vertical-cavity surface-emitting laser) light source. Since the luminous bodies of the emitting light sources have different wavelength ranges, the wavelength ranges of the luminous bodies can be reasonably set according to requirements. Specifically, a slope section range of the luminous body may include an ultraviolet band, a visible band, an infrared band, and the like. It can be understood that in other embodiments, the luminous bodies of the emitting light sources may also have the same wavelength ranges.

The detection assembly 230 may be a silicon-based detector, or the detection assembly 230 may be an APD (avalanche photo diode, avalanche photo diode), a position sensor, or a CMOS (complementary metal oxide semiconductor (complementary metal oxide semiconductor)) camera. Specifically, when the detection assembly 230 includes two photosensitive surfaces, the detection assembly 230 may be a dual-silicon-based detector, such as a double-sided array SIPM (silicon photomultiplier, silicon photomultiplier), a dual photomultiplier, a dual APD array, or the like.

In some possible embodiments according to the present disclosure, the ranging apparatus also includes a diaphragm (not shown in the figure).

In an example, the diaphragm corresponds to the emitting light source and is located on an emission optical path of the emitting light source. The diaphragm is configured to limit an intensity and/or an emission angle of the emitted light emitted by the emitting light source. That is, one emitting light source corresponds to one diaphragm, and each diaphragm is located on an emission optical path of the corresponding emitting light source. Therefore, the diaphragm is used to limit the intensity and/or the divergence angle of the emitted light emitted by the corresponding emitting light source. For example, only part of the light emitted by the emitting light source passing through the diaphragm is irradiated on the target object 300 to form probe light. That is, with the arrangement of the diaphragm, interference light can be effectively filtered, the influence of the interference light or the stray light on the probe light can be eliminated, and at the same time, and crosstalk among the emitting light sources in the emission assembly 210 can be prevented, thereby helping improve ranging accuracy and stability.

In another example, the diaphragm corresponds to the photosensitive surface and is located on a receiving optical path of the photosensitive surface. The diaphragm is configured to limit an intensity and/or an incidence angle of the reflected light received by the photosensitive surface and reflected by the target object. That is, one photosensitive surface corresponds to one diaphragm, and each diaphragm is located on a receiving optical path of the corresponding photosensitive surface. Therefore, the diaphragm is used to limit the intensity and/or the incidence angle of the reflected light received by the corresponding photosensitive surface and reflected by the target object. For example, only part of the light of the reflected light passing through the diaphragm is received by the photosensitive surface to form the reflected light information. That is, with the arrangement of the diaphragm, interference light can be effectively filtered, and the influence of the interference light or the stray light on the reflected light information can be eliminated, thereby helping improve ranging accuracy and stability.

It can be understood that, in other examples, the diaphragm may include a first diaphragm and a second diaphragm. The first diaphragm is located on the emission optical path of the emitting light source, and is configured to limit the intensity and/or the emission angle of the emitted light emitted by the emitting light source. The second diaphragm is located on the receiving optical path of the photosensitive surface, and is configured to limit the intensity and/or the incidence angle of the reflected light received by the photosensitive surface and reflected by the target object. Therefore, the first diaphragm and the second diaphragm are used together to limit the light, thereby further improving ranging accuracy and stability. As shown in FIGs. 8 and 9, in some possible embodiments according to the present disclosure, each emitting light source also includes a luminous body and a collimating lens 215, and the collimating lens 215 is located on an emission optical path of the luminous body and is configured to change an emission angle and/or a divergence angle of the luminous body.

With the arrangement of the collimating lens 215, the emission angle and/or the divergence angle of the luminous body can be changed. Therefore, it can be ensured that the light emitted by the luminous body is irradiated on the target object 300 and has a certain radiation area, and the reflected light reflected by the target object 300 is completely received by the detection assembly 230 after passing through the receiving mirror 220, thereby avoiding the problem of detection failure caused by the fact that the detection assembly 230 is unable to receive the large-angle returned light, and ensuring the ranging accuracy. It can be understood that the collimating lens 215 corresponding to the luminous bodies may be mounted on one mounting bracket, or the collimating lens 215 corresponding to the luminous bodies may be respectively mounted on different mounting brackets.

It can be understood that, when the ranging apparatus 200 includes a diaphragm and an accurate lens, the diaphragm may be located between the luminous body and the corresponding collimating lens 215, or the diaphragm may be located on a side of the collimating lens 215 far away from the luminous body. That is, the diaphragm may be located on a light-incident side of the collimating lens 215, or may be located on a light-emergent side of the collimating lens 215.

In some possible embodiments according to the present disclosure, the emission assembly 210 also includes: a light-shielding frame (not shown in the figure). The light-shielding frame is located between the corresponding luminous body and the collimating lens 215, and is disposed between two adjacent collimating lenses 215 to separate the two adjacent collimating lenses 215.

With the arrangement of the light-shielding frame, the corresponding luminous body and the collimating lens 215 are limited in one space, such that the light emitted by the luminous body is projected after the corresponding collimating lens 215 changes the light distribution, thereby avoiding the situation that the light emitted by the current luminous body is projected onto the collimating lens 215 corresponding to a luminous body adjacent to the luminous body. That is, with the arrangement of the light-shielding frame, the stray light of the adjacent luminous body can be filtered, the interference of the stray light generated by the adjacent luminous body on the collimating lens 215 can be reduced, and crosstalk among the emitting light sources in the emission assembly 210 can be prevented, thereby helping improve ranging accuracy and stability.

Further, the ranging apparatus 200 also includes: light filters corresponding to the luminous bodies. The light filters are respectively disposed on light channels through which the probe light emitted by the corresponding luminous bodies is reflected to the detection assembly 230 by the target object 300.

The light filter, the light filter has a function of filtering stray light. The light filter is distributed and disposed on a light channel through which the probe light emitted by the corresponding luminous body is reflected to the detection assembly 230 by the target object 300. The probe light of the luminous bodies reflected by the target object 300 can be filtered by a filter to reduce stray light, and then irradiated on the detection assembly 230, thereby ensuring that the photosensitive surfaces of the detection assembly 230 can accurately and reliably receive the reflected light information of the target object 300, improving the accuracy of the energy values of the light spots on the photosensitive surfaces, and improving the ranging accuracy.

The light filter is disposed on a light channel through which the probe light emitted by the corresponding luminous body is reflected to the detection assembly by the target object. Specifically, the light filter may be located between the detection assembly 230 and the receiving mirror 220, or the light filter may be disposed on a light-incident side of the receiving mirror 220; that is, the light filter is located between the receiving mirror and the target object.

Further, based on the fact that the luminous bodies of the emitting light sources have different wavelength ranges, the light filters are configured to transmit optical signals within the wavelength ranges of the corresponding luminous bodies.

That is, when the luminous bodies of the emitting light sources have different wavelength ranges, the light filter located on the light channel through which the probe light emitted by the corresponding luminous body is reflected to the detection assembly by the target object can allow optical signals of the luminous body with the same wavelength range to pass, and filter optical signals with wavelength ranges different from that of the luminous body, thereby further reducing interference of stray light, reducing interference of the stray light generated by the adjacent luminous body on the collimating lens 215, preventing crosstalk of the emitting light sources in the emission assembly 210, and helping improve ranging accuracy and stability.

It can be understood that the computer program can also be used to control the luminous intensity of the luminous body. For example, for a luminous body in a direction that does not have a high requirement on the ranging capability, the luminous intensity of the luminous body is appropriately attenuated, thereby reducing the influence of the reflected light of the luminous body irradiated on the target object 300 on the optical paths corresponding to other luminous bodies, and improving ranging accuracy and stability.

In some possible embodiments according to the present disclosure, the detection assembly 230 is disposed parallel to or obliquely to the focal plane of the receiving mirror 220.

Therefore, the equal position of the detection assembly 230 and the focal plane of the receiving mirror 220 may be reasonably adjusted according to the positions of the emitting light source and the receiving mirror 220 and the emission angle of the emitting light source, thereby ensuring that the light emitted by the luminous body is irradiated on the target object 300, and the reflected light reflected by the target object 300 is completely received by the detection assembly 230 after passing through the receiving mirror 220, avoiding the problem of detection failure caused by the fact that the detection assembly 230 is unable to receive the large-angle returned light, and ensuring the ranging accuracy.

Specifically, the detection assembly 230 may also be located at the focal plane of the receiving mirror 220 and at a position above or below the receiving mirror 220 to ensure the comprehensiveness of the reflected light received in the detection interval and provide the ranging accuracy. It can be understood that, in other examples, the detection assembly 230 may be located in front of or behind the focal plane of the receiving mirror 220.

In some possible embodiments according to the present disclosure, the inclination angle between each emitting light source and the receiving mirror 220 is adjustable. Therefore, the inclination angle between each emitting light source and the receiving mirror 220 may be reasonably adjusted according to the specific positions and parameters of each component, and the material of the target object 300, thereby ensuring that the light emitted by each luminous body is irradiated on the target object 300, and the reflected light reflected by the target object 300 is completely received by the detection assembly 230 after passing through the receiving mirror 220, avoiding the problem of detection failure caused by the fact that the detection assembly 230 is unable to receive the large-angle returned light, and improving the ranging accuracy.

In some possible embodiments according to the present disclosure, the ranging apparatus also includes an encoder configured to encode emitted signals emitted by the emitting light sources; and a processor configured to decode received signals received by the photosensitive surfaces, and to calculate a distance value when the received signals match the emitted signals.

The emission assembly may encode, according to an encoding protocol of the encoder, the emitted signals emitted by the emitting light sources, such that the emitting light sources emit encoded light. After the photosensitive surface of the detection assembly receives the light signal (that is, the received signal), the detection assembly transmits the received signal to the processor. The processor decodes the received signal, and then determines whether a code pattern of the received signal matches that of the emitted signal. If a match is found, data processing is performed to calculate the distance value. If no match is found, no calculation is performed. Therefore, optical crosstalk of another component can be effectively avoided to improve ranging accuracy and stability.

It can be understood that a computer program may also be used to control different ranging apparatuses 200 including the emitting light sources and the detection assembly 230 to have different frequencies, thereby reducing internal signal crosstalk, and improving ranging accuracy and stability.

In a second aspect of the present disclosure, a self-propelled device 100 is provided, which includes a machine body 110, and the ranging apparatus 200 according to any embodiment of the first aspect. The ranging apparatus 200 is disposed on the machine body 110. Since the self-propelled device 100 includes the ranging apparatus 200 according to any one of the above embodiments, the self-propelled device has all the technical effects of the ranging apparatus 200 described above.

Specifically, the ranging apparatus 200 according to the present disclosure may perform short-distance detection, and for example, may detect obstacles that are close to the self-propelled device 100, such that the self-propelled device 100 controls the self-propelled device 100 to travel along the wall according to a detection result of the distance detection apparatus.

Further, the number of the ranging apparatuses 200 may be at least one. For example, the number of the ranging apparatuses 200 may be one, two, three, or the like. The number and the structure of the ranging apparatuses 200 may be reasonably set according to detection requirements, obstacle avoidance accuracy of the self-propelled device 100, and the like.

The present disclosure has been described with reference to the above embodiments. It should be understood that, however, the above embodiments are only for the purpose of illustration and description and are not intended to limit the present disclosure to the scope of the embodiments described. In addition, those skilled in the art can understand that the present disclosure is not limited to the above embodiments. More variations and modifications can be made according to the teachings of the present disclosure, and these variations and modifications all fall within the scope of protection of the present disclosure. The protection scope of the present disclosure is defined by the appended claims and their equivalents.

## Claims

1. A ranging apparatus applied to a self-propelled device, wherein the ranging apparatus comprises:
an emission assembly, a receiving mirror, a detection assembly, and a controller, the receiving mirror and the emission assembly being spaced apart from each other, the detection assembly being located near a focal plane of the receiving mirror, the emission assembly comprising at least two emitting light sources with light-emitting directions not parallel to each other, the emitting light source being configured to emit probe light with a divergence angle to a target object, the detection assembly comprising at least two photosensitive surfaces, and the photosensitive surface being configured to receive reflected light information passing through the receiving mirror and reflected by the target object; and
the controller being electrically connected to the emitting light sources and the detection assembly, and the controller being configured to control the emitting light sources to work in a time-division manner, and determine a measured distance of the target object according to the reflected light information from a same emitting light source received by the photosensitive surfaces.

2. The ranging apparatus according to claim 1, wherein
the photosensitive surface faces a light-emergent side of the receiving mirror,
the reflected light information comprises energy values of light spots from the same emitting light source distributed on the photosensitive surfaces, the energy values of the light spots on the photosensitive surfaces are associated with the measured distance, and the energy values of the light spots on the photosensitive surfaces are associated with a position and/or an area of a distribution map of the light spots on the photosensitive surfaces.

3. The ranging apparatus according to claim 1, wherein
each emitting light source comprises a luminous body, and luminous bodies of the emitting light sources have different wavelength ranges.

4. The ranging apparatus according to claim 1, wherein the ranging apparatus also comprises:
a diaphragm, wherein
the diaphragm corresponds to the emitting light source, is located on an emission optical path of the emitting light source, and is configured to limit an intensity and/or a divergence angle of emitted light emitted by the emitting light source; and/or
the diaphragm corresponds to the photosensitive surface, is located on a receiving optical path of the photosensitive surface, and is configured to limit an intensity and/or an incidence angle of reflected light received by the photosensitive surface and reflected by the target object.

5. The ranging apparatus according to claim 1, wherein
each emitting light source comprises a luminous body and a collimating lens, and the collimating lens is located on an emission optical path of the luminous body and is configured to change an emission angle and/or a divergence angle of the luminous body.

6. The ranging apparatus according to claim 5, wherein the emission assembly also comprises:
a light-shielding frame, the light-shielding frame being located between the corresponding luminous body and the collimating lens, and being disposed between two adjacent collimating lenses to separate the two adjacent collimating lenses.

7. The ranging apparatus according to claim 3, wherein the ranging apparatus also comprises:
light filters corresponding to the luminous bodies, the light filters being respectively disposed on light channels through which the probe light emitted by the corresponding luminous bodies is reflected to the detection assembly by the target object,
wherein based on the fact that the luminous bodies of the emitting light sources have the different wavelength ranges, the light filters are configured to transmit optical signals within the wavelength ranges of the corresponding luminous bodies.

8. The ranging apparatus according to claim 1, wherein
the detection assembly is disposed parallel to or obliquely to the focal plane of the receiving mirror; and
the detection assembly is located at the focal plane of the receiving mirror.

9. The ranging apparatus according to claim 1, wherein
an inclination angle between each emitting light source and the receiving mirror is adjustable.

10. The ranging apparatus according to claim 1, wherein the emission assembly also comprises:
a circuit board, the emitting light sources being mounted on the circuit board and electrically connected to the circuit board,
wherein the at least two emitting light sources are spaced apart from each other in a straight line or a curved line.

11. The ranging apparatus according to claim 10, wherein
the plurality of emitting light sources comprise a first emitting light source, a second emitting light source, and a third emitting light source that are sequentially distributed from top to bottom in a vertical direction, a light-emitting direction of the first emitting light source is inclined upward, a light-emitting direction of the second emitting light source is horizontally forward, and a light-emitting direction of the third emitting light source is inclined downward.

12. The ranging apparatus according to claim 1, wherein the ranging apparatus also comprises:
an encoder configured to encode emitted signals emitted by the emitting light sources; and
a processor configured to decode received signals received by the photosensitive surfaces, and to calculate a distance value when the received signals match the emitted signals.

13. A self-propelled device, wherein the self-propelled device comprises:
a machine body, and the ranging apparatus according to any one of claims 1 to 12, the ranging apparatus being disposed on the machine body.
